# EUROPÄISCHE PATENTSCHRIFT

(11) **EP 2 780 887 B1**
(45) Veröffentlichungstag und Bekanntmachung des Hinweises auf die Patenterteilung: **09.12.2015**
(21) Anmeldenummer: 12774944.8
(22) Anmeldetag: 18.09.2012
(51) Int. Cl.: G06K 9/32, G06T 7/00

(54) **VERFAHREN ZUR SENSORISCHEN BILDERFASSUNG SOWIE VERWENDUNG EINES SOLCHEN VERFAHRENS IN EINEM ELEKTROWERKZEUG**
METHOD FOR SENSOR IMAGE DETECTION AND USE OF SUCH A METHOD IN AN ELECTRICAL TOOL
PROCÉDÉ DE CAPTURE D'IMAGE SENSORIELLE ET UTILISATION D'UN TEL PROCÉDÉ DANS UN OUTIL ÉLECTRIQUE

(30) Priorität: 15.11.2011 DE 102011086419
(43) Veröffentlichungstag der Anmeldung: 24.09.2014
(73) Patentinhaber: Robert Bosch GmbH, 70442 Stuttgart (DE)
(72) Erfinder: STEINLECHNER, Siegbert, 71229 Leonberg (DE)
(86) Internationale Anmeldenummer: PCT/EP2012/068334
(87) Internationale Veröffentlichungsnummer: WO 2013/072099

(56) Entgegenhaltungen:
- DE-A1-102008 040 379
- DE-A1-102008 055 059
- US-A1- 2011 067 248
- HARVEY A L ED - LANE ET AL: "Handwritten Character Segmentation Issues", PROCEEDINGS, MAIN SYMPOSIUM / ISSPA 96, FOURTH INTERNATIONAL SYMPOSIUM ON SIGNAL PROCESSING AND ITS APPLICATIONS, AUGUST 25 - 20, 1996, ROYAL PINES RESORT, GOLD COAST, QUEENSLAND, AUSTRALIA : 3 TUTORIALS IN COMMUNICATION, SPEECH AND IMAGE PROCESSING:, 30. August 1996 (1996-08-30), Seiten 581-584, XP032100575, ISBN: 978-0-7803-4114-2
- YEFENG ZHENG ET AL: "A model-based line detection algorithm in documents", DOCUMENT ANALYSIS AND RECOGNITION, 2003. PROCEEDINGS. SEVENTH INTERNAT IONAL CONFERENCE ON AUG. 3-6, 2003, PISCATAWAY, NJ, USA,IEEE, 3. August 2003 (2003-08-03), Seiten 44-48, XP010656580, DOI: 10.1109/ICDAR.2003.1227625 ISBN: 978-0-7695-1960-9
- William K. Pratt: "Digital Image Processing", 1991, Wiley, XP002688069, Seiten 604-605, Seite 604 - Seite 605

## Beschreibung

Die Erfindung betrifft ein Verfahren zur sensorischen Bilderfassung einer auf einem Werkstück gegebenen und mit einem Arbeitswerkzeug eines Arbeitsgerätes nachzufahrenden Arbeitslinie.

### Stand der Technik

Handgeführte Arbeitsgeräte mit einem auf ein Werkstück zugreifenden Arbeitswerkzeug und einer Bilderfassungseinrichtung für eine mit dem Arbeitswerkzeug zu verfolgende, an einem Werkstück vorgegebene Arbeitslinie sind beispielsweise aus der WO 2008/055738 A1 bekannt. Dies insbesondere für Arbeitsgeräte in der Ausbildung als Handhubsägen, die mithilfe der optischen Bilderfassungseinrichtung auch halbautonom zu betreiben sind. Hierfür werden über die Erfassungseinrichtung den Verlauf der Arbeitslinie beschreibende Daten gewonnen und über eine Verarbeitungseinheit in Stellbefehle für die Ausrichtung des als Arbeitswerkzeug vorgesehenen Sägeblattes umgesetzt.

Als Erfassungseinrichtung ist bevorzugt eine 2D-Sensorik in Form einer Kamera vorgesehen, bei der zur Erkennung der Arbeitslinie eine Bildverarbeitung eingesetzt wird, die eine ideelle Aufteilung des optisch erfassten Arbeitsbereiches in einzelne Suchzeilen nutzt, um aus einzelnen erfassten Punkten der Arbeitslinie über die Verarbeitungseinheit durch Interpolation den mit dem Arbeitswerkzeug zu verfolgenden Verlauf der Arbeitslinie zu ermitteln.

Ungeachtet solcher Hilfsmaßnahmen kann die Erfassungsqualität für die werkstückseitig vorgegebene Arbeitslinie insbesondere bei schlechtem Kontrast zur Oberfläche des Werkstückes nicht befriedigen und die werkstückseitig vorgegebene Arbeitslinie häufig nicht in der für ein positives Arbeitsergebnis erforderlichen Genauigkeit erfasst werden, und dies insbesondere auch im kritischen Ansatzbereich des Arbeitswerkzeuges zum Werkstück.

Bei einem aus der US 2011/067248 bekannten Verfahren zur sensorischen Bilderfassung einer auf einem Werkstück gegebenen und mit einem Arbeitswerkzeug eines handgehaltenen Arbeitsgerätes nachzufahrenden Arbeitslinie wird die Arbeitslinie mittels einer Sensorik in Form einer Kamera erfasst. Diese ist auf eine geräteseitig umgrenzte Detektionsfläche ausgerichtet, in deren Bereich das Arbeitswerkzeug in Verfolgung der durch die Detektionsfläche verlaufenden Arbeitslinie zugreift. Zur Verlaufserfassung der Arbeitslinie werden über die Kamera Schnittpunkte der Arbeitslinie zu quer zur Arbeitsrichtung verlaufenden Suchzeilen erfasst, die Lagedaten dieser Schnittpunkte rechnerisch in Steuersignale zur Ausrichtung des Arbeitswerkzeuges auf die Arbeitslinie umgesetzt und es wird ferner zur Visualisierung der Arbeitslinie für den Benutzer bezogen auf das Arbeitsgerät und zur Erleichterung der Führung des Arbeitsgerätes durch den Benutzer die Lage der Arbeitslinie innerhalb der Detektionsfläche in einer Displaydarstellung veranschaulicht. Durch die Detektionsfläche ist dabei auch ein Bereich abgegrenzt, innerhalb dessen das Arbeitsgerät beim "Anfahren" an das jeweilige Werkstück lediglich quer zur Arbeitslinie längs der Ansatzkante verfahren und an die Arbeitslinie heranzuführen ist.

### Offenbarung der Erfindung

Durch die Erfindung wird ein alternatives Verfahren zur Bestimmung der Verlaufsrichtung der Arbeitslinie angegeben, das auch unter ungünstigen Umständen die sensorische Bilderfassung von werkstückseitigen Arbeitslinien ermöglicht.

Erreicht wird dies mit den Merkmalen des Anspruches 1, zu dem die Unteransprüche zweckmäßige Weiterbildungen aufzeigen und die in der Beschreibung insbesondere auch anhand der Zeichnungen mit Ausgestaltungen erläutert sind.

Prinzipiell wird bei dem erfindungsgemäßen Verfahren zur sensorischen Bilderfassung von an einer Werkstückoberfläche vorgegebenen Arbeitslinien ein dem Arbeitswerkzeug vorgelagerter Bildausschnitt durch Erfassung der Bildpixel dieses Ausschnittes in einem Grauwertbild ausgewertet. Dieses Grauwertbild wird ideell mit einem Rastermuster überzogen, und es werden die Grauwerte der Bildpixel des Bildausschnittes statistisch im Hinblick auf entlang der Arbeitslinie gegebene Extremwerte ausgewertet.

Bezogen auf eine zum Werkstück vorgegebene Arbeitslinie ergeben sich für solche Bildpixel Grauwert-Extremwerte, welche in Berührung und/oder in Überdeckung zur Arbeitslinie stehen.

Insbesondere in Verbindung mit unterschiedlichen Rasterungen besteht so die Möglichkeit, unterschiedliche Rastermuster im Hinblick auf unterschiedliche, zu erfassende Bilder zum Einsatz zu bringen, so zur Bestimmung des Ansatzpunktes für das Arbeitswerkzeug am Werkstück, also des Beginns der Arbeitslinie und/oder zur Erfassung der Arbeitslinie in ihrem weiteren Verlauf.

Zunächst erfolgt die Zentrierung des Bildausschnittes in X-Richtung eines X-Y-Koordinatensystems, insbesondere eines kartesischen Koordinatensystems, bei in X-Richtung verlaufender werkstückseitiger Ansatzkante für das jeweilige Arbeitswerkzeug des Arbeitsgerätes. Dies ausgehend von im Regelfall beim Ansetzen des Arbeitswerkzeuges an einem Werkstück gegebener Ausrichtung des Arbeitsgerätes auf den Anfangsverlauf der Arbeitslinie. Ferner bei einer Ausrichtung von Rasterlinien in Y-Richtung, also quer zur Ansatzkante, so dass bei entsprechend enger Rasterung entlang der Ansatzkante allein über den Vergleich der Grauwerte der längs der Ansatzkante liegenden Bildpixel mit hinreichender Genauigkeit die "Mitte", also der zur Arbeitslinie in Überdeckung optimale Ansatzpunkt vorgegeben ist und keine weitere Zentrierung des Bildes längs der Ansatzkante nötig ist. Bezogen auf die in Grauwerten erfassten Bildpixel ist als "Mitte" jene Position längs der Ansatzkante definiert, in der die Summe der Grauwerte der senkrecht zur Ansatzkante kantennah erfassten Bildpixel am stärksten vom Mittelwert aller senkrecht zur Ansatzkante längs der Rasterlinien erfassten Grauwert-Summenwerte abweicht.

Eine Vorgehensweise zur Bestimmung der Lage des Ansatzpunktes bezogen auf den Bildausschnitt ist dadurch bestimmt, dass im Bildausschnitt für eine Anzahl von Positionen längs der Ansatzkante die Grauwerte, ausgehend von der Ansatzkante senkrecht hierzu jeweils für wenige Bildpixel aufsummiert werden und die Position längs der Ansatzkante für die in der Summe die größte Abweichung vom Mittelwert aller Positionen längs der Ansatzkante, gegeben ist, als Ansatzpunkt gesetzt wird. Diese Vorgehensweise zur Festlegung des Ansatzpunktes ist auch unabhängig von der Art, in der die Verfolgung der Arbeitslinie nachfolgend erfolgt.

Ausgehend von einem festgelegten Ansatzpunkt wird im Hinblick auf die exakte Verlaufsbestimmung der Arbeitslinie nach erfolgter Zentrierung des Bildausschnittes auf den Ansatzpunkt als Arbeitslinie, falls eine solche Deckungslage nicht schon von vornherein gegeben ist, mit einer Rasterung gearbeitet, deren Rasterlinien ausgehend von der "Mitte" als Ansatzpunkt fächerartig auseinanderlaufen, so dass auch bei einem kleinen erfassten Bildausschnitt und gegebenenfalls gekrümmten Verlauf der Arbeitslinie eine für deren Verlauf hinreichende Zahl von Bildpixeln getroffen und hinsichtlich ihrer Grauwerte erfasst werden kann. Bei einer solchen Rasterung mit strahlenförmig, fächerartig vom Ansatzpunkt ausgehenden ideellen Geraden als Rasterlinien werden die Grauwerte der zu diesen Geraden in Berührung stehenden Bildpixel aufsummiert und der Verlauf der Arbeitslinie im Bereich des Bildausschnittes wird durch die Gerade bestimmt, für die der Summenwert der Bildpixel im Vergleich zum Summenwert der Bildpixel der übrigen Geraden einen Extremwert aufweist.

Es erfolgt also die Auswertung des Grauwertbildes zur Erfassung der Arbeitslinie unter statistischen Gesichtspunkten dahingehend, dass die in Berührung zur Arbeitslinie stehenden oder in Überdeckung zur Arbeitslinie liegenden Bildpixel sich in der Summe von den Grauwerten anderweitiger, auf gemeinsamen Verbindungsgeraden liegenden Bildpixeln unterscheiden und Extremwerte bilden, die in Abhängigkeit von der jeweiligen Helligkeitspaarung zwischen der die Arbeitslinie bildenden Markierung und der Oberfläche des Werkstückes - dunkler Strich auf heller Oberfläche oder heller Strich auf dunkler Oberfläche - größer oder kleiner als die sonstigen Summenwerte sind.

Im praktischen Arbeiten bietet die erfindungsgemäße Verfahrensweise den Vorteil, den Benutzer des Arbeitsgerätes vom Ansetzen des Arbeitswerkzeuges zum Werkstück bis hin zur Führung des Arbeitswerkzeuges entlang der Arbeitslinie übergangslos zu unterstützen. In gleicher Weise gilt dies bei der Führung des Arbeitsgerätes über das Arbeitswerkzeug entlang der Arbeitslinie im autonomen oder halbautonomen Arbeitsbetrieb, wobei durch die Zweistufigkeit des Verfahrens zunächst mit der Erfassung des Ansatzpunktes des Arbeitswerkzeugs zum Werkstück und in der zweiten Stufe durch die Ausrichtung auf die Arbeitslinie ausgehend vom Ansatzpunkt auch ein einfaches Verfahren geschaffen ist.

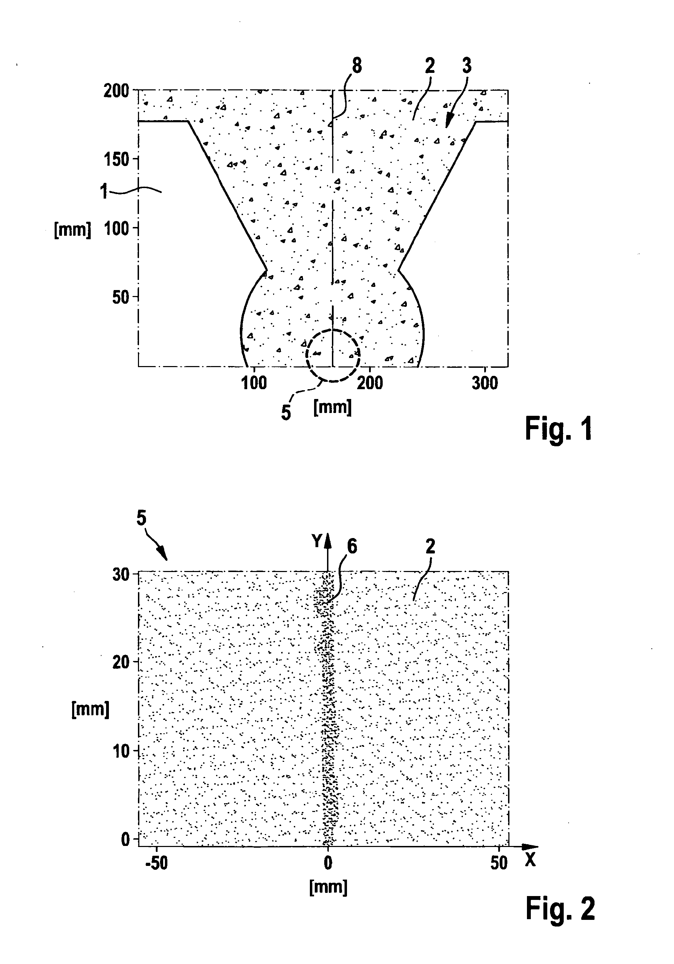

Weitere Einzelheiten und Merkmale der Erfindung ergeben sich aus der nachfolgenden Beschreibung zweier Darstellungsgruppen mit jeweils vier einander entsprechenden Abbildungen, die als Fig. 1 bis 4 und 5 bis 8 bezeichnet sind und anhand derer das erfindungsgemäße Verfahren ergänzend erläutert wird.

### Zeichnung

Es zeigen:
- Figur 1: eine Darstellung des Arbeitsbereiches einer Stichsäge vor dem Sägblatt mit auf dem Werkstück aufgezeichneter geraden Arbeitslinie
- Figur 2: einen Grauwertausschnitt aus dem Arbeitsbereich gemäß Figur 1
- Figur 3: Verlauf des Summenwertes über angenommenen Gradensteigungen gemäß dem erfindungsgemäßen Verfahren
- Figur 4: der Grauwertausschnitt des Arbeitsbereich gemäß Figur 2 mit eingezeichneter, berechneter Geraden
- Figur 5: eine Darstellung des Arbeitsbereiches einer Stichsäge vor dem Sägblatt mit auf dem Werkstück aufgezeichneter gekrümmten Arbeitslinie
- Figur 6: einen Grauwertausschnitt aus dem Arbeitsbereich gemäß Figur 5
- Figur 7: Verlauf des Summenwertes über angenommenen Gradensteigungen gemäß dem erfindungsgemäßen Verfahren
- Figur 8: der Grauwertausschnitt des Arbeitsbereich gemäß Figur 6 mit eingezeichneter, berechneter Näherungsgeraden
- Figur 9: eine erfindungsgemäße Werkzeugmaschine in der Ausführungsform einer Stichsäge

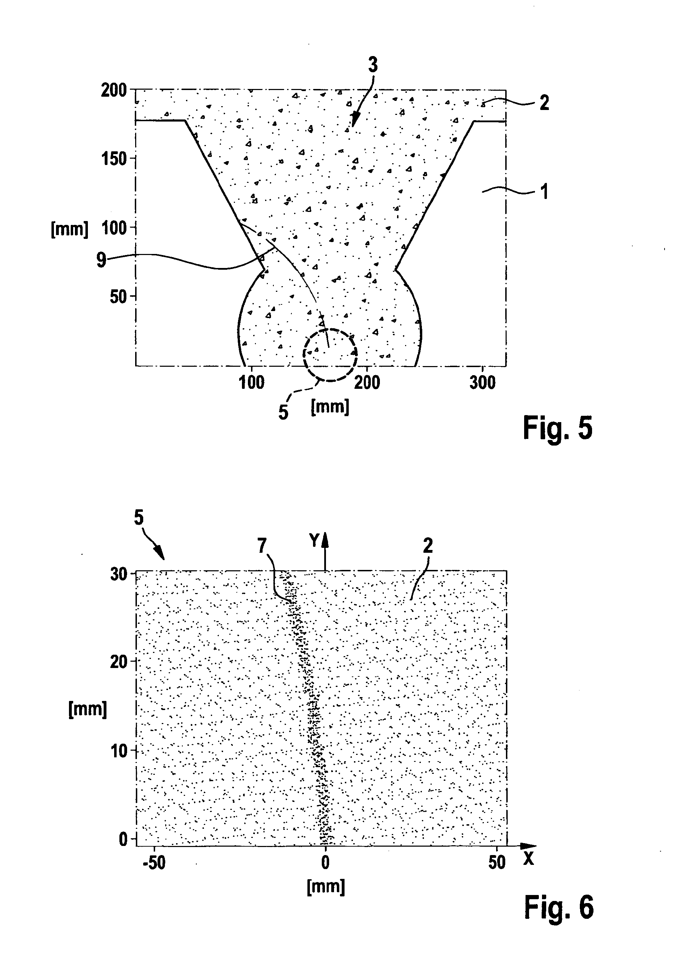

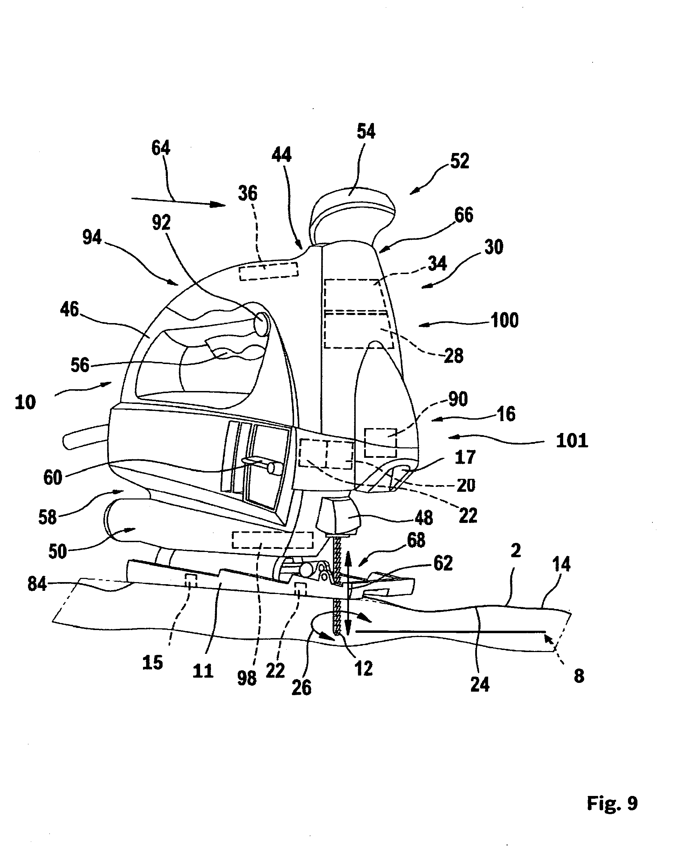

Die Figuren 1 bis 4 betreffen ein erstes Ausführungsbeispiel eine im wesentlichen geraden Arbeitslinie. Die Figuren 5 bis 8 beschreiben ein zweites Ausführungsbeispiel einer gekrümmten Arbeitslinie. Figur 9 zeigt ein erfindungsgemäßes Elektrowerkzeug in der Ausführungsform einer Handhubsäge (Stichsäge), die nach dem erfindungsgemäßen Verfahren betreibbar ist.

In den Fig. 1 und 5 ist jeweils in Draufsicht der vor einem nicht dargestellten Sägeblatt als Arbeitswerkzeug liegende Bereich einer Standfußplatte 1 einer auf einem Werkstück 2 aufgesetzten, mit einem Sägeblatt als Arbeitswerkzeug arbeitenden Stichsäge gezeigt und die Standfußplatte 1 ist mit einer zum Sägeblatt teilweise umschließenden und anschließend an diesen Bereich in Arbeitsrichtung sich erweiternden Ausnehmung 3 versehen, die den Blick auf die zur Oberfläche des Werkstücks 2 vorgegebene und von einer Ansatzkante des Werkstücks 2 für das Sägeblatt ausgehenden Arbeitslinie 8, 9 freilässt. Die Arbeitslinie 8 verläuft in der Darstellung gemäß Fig. 1 ausgehend vom Ansatzpunkt an der nicht dargestellten Ansatzkante des Werkstückes 2 geradlinig und im Wesentlichen senkrecht, und die Arbeitslinie 9 ist in Fig. 5 als gekrümmte, mit dem Arbeitswerkzeug zu verfolgende Kurvenbahn dargestellt.

In einem ersten Schritt des erfindungsgemäßen Verfahrens wird eine Bildaufnahme des Arbeitsbereichs vor dem Arbeitswerkzeug, d.h. dem Elektrowerkzeug gemacht (Vergleiche Figur 1 bzw. 5). Dies erfolgt unter Verwendung eine im Gerät integrierten Sensorik, wie beispielsweise einer im Gerät eingebauten CCD-Kamera. Dabei wird davon ausgegangen, dass das Arbeitswerkzeug sich schon näherungsweise an der richtigen Stelle des Werkstückes d.h. in der Nähe des Anfangspunktes der vom Anwender auf die Oberfläche des Werkstücks gezeichneten Arbeitslinie befindet und dass die Ausrichtung des Gerätes näherungsweise in die Richtung zeigt, in die sich das Gerät in Zukunft, d.h. bei seiner funktionellen Bestimmung bewegen soll.

In einem zweiten Schritt wird ein Ausschnitt aus der Bildaufnahme, insbesondere der Bereich direkt vor dem Arbeitswerkzeug, beispielsweise einem Sägeblatt, gebildet und in ein Grauwertbild umgerechnet. Ein solches Grauwertbild hat eine reduzierte Pixelzahl, von beispielsweise 100*30 Pixeln.

In den Fig. 2 und 6 ist ein entsprechender Ausschnitt als Graubild erfasst und dargestellt. Der Ausschnitt der Figuren 2 bzw. 6 entspricht im Wesentlichen dem kleinen, in den Figuren 1 bzw. 5 strichliniert dargestellten Ausschnitt 5 des Oberflächenbereichs des Werkstückes 2, der im Bereich der Ausnehmung 3 der Standfußplatte 1 liegt. Die Arbeitslinie 8 bzw. 9 erstreckt sich mit einem kurzen Abschnitt im Bereich des Ausschnittes 5, der in Arbeitsrichtung vorgelagert zum als Sägeblatt ausgebildeten Arbeitswerkzeug liegt. Zum Ausschnitt 5 als stark vergrößerter Graubilddarstellung ist in Fig. 2 und 6 zur Veranschaulichung ein X-Y-Koordinatensystem angedeutet, mit einer längs der Ansatzkante für das Arbeitswerkzeug am Werkstück 2 verlaufender X-Achse und einer hierauf senkrecht stehenden Y-Achse. Der Schnittpunkt der Achsen X und Y deckt sich im Ausführungsbeispiel mit der "Mitte" und entspricht somit dem Ausgangspunkt der jeweiligen Arbeitslinie 8, 9. Wird im Arbeitsbetrieb, also zum Beispiel beim Sägen, der Ausgangspunkt der Arbeitslinie 8, 9 als Ansatzpunkt für das Arbeitswerkzeug verlassen, so arbeitet das Arbeitswerkzeug am Werkstück 2 entlang der Arbeitslinie 8, 9, so dass sich über dem Verlauf der Arbeitslinie 8,9 in deren Erfassung über Graubilddarstellungen gemäß Fig. 2 oder 6 für den jeweils erfassten Bildausschnitt 5 entsprechende Verhältnisse ergeben.

Im dritten Schritt des Verfahrens erfolgt die Zentrierung des Grauwert-Bildes (vergleiche Figur 2 bzw. 6) in x-Richtung. Dazu werden die Grauwerte weniger Pixel (beispielsweise nur 10 Pixel) in y-Richtung beginnend bei y=0 auf summiert. Dies erfolgt getrennt für jede x-Position (hier also beispielsweise für : x = -50, -49, ...,49, 50). Diejenige x-Position, bei der die Summe am stärksten vom Mittelwert aller Summen abweicht, wird als "Mitte" angenommen und definiert. Befindet sich ein dunkler Strich als Arbeitslinie auf einer hellen Werkstück-Oberfläche, so wird bei der x-Position, in der sich der Strich befindet, die Summe kleiner als der Mittelwert aller Summen sein. Befindet sich ein heller Strich als Arbeitslinie auf einer dunkleren Werkstück-Oberfläche, so wird die Summe an der Strichposition größer sein als der Mittelwert über alle Summen. In beiden Fällen ist die Abweichung von Mittelwert aber ein Extremum.

Nachdem so die Mittenposition gefunden wurde, wird das Bild zentriert, d.h. in x-Richtung soweit verschoben, dass der Strich der Arbeitslinie bei der neuen Position x=0 liegt. Dies ist in Figur 2 bzw. 6 bereits der Fall. In vielen Fällen kann der soeben beschriebene, dritte Schritt der Zentrierung auch weggelassen werden. Dies ist insbesondere dann der Fall, wenn die Werkzeugmaschine und die Kameraausrichtung eine hohe mechanische Präzision aufweisen und sich die Werkzeugmaschine von Anfang an in der richtigen x-Position befindet.

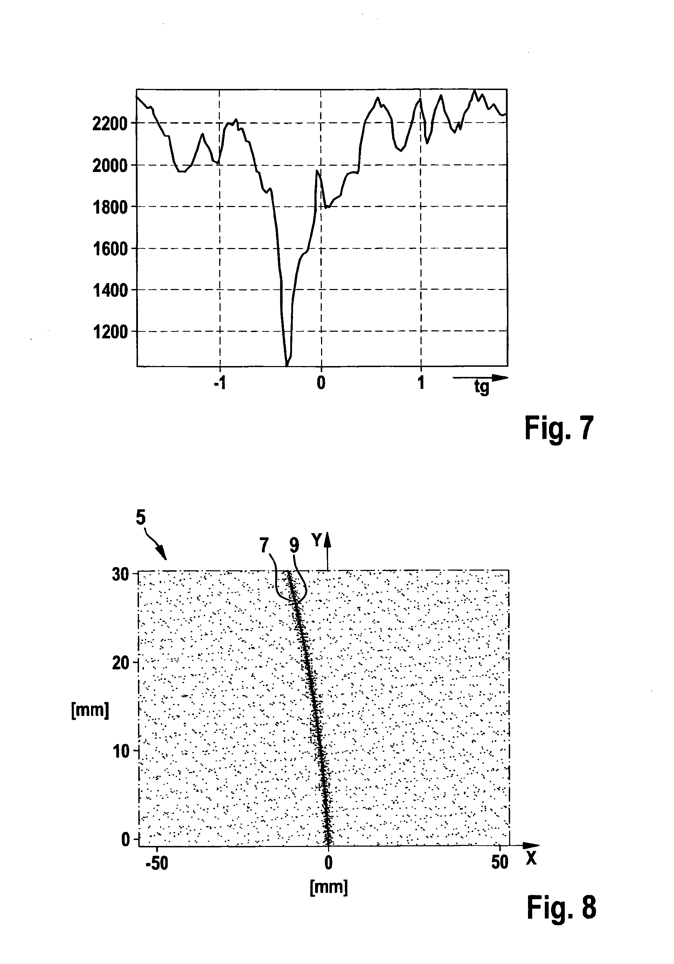

Bezogen auf die Darstellungen gemäß Fig. 2 und 6 ist die Lage der Bildpixel, die, bezogen auf den Bildausschnitt 5, in der Summe ihrer Grauwerte am stärksten vom Mittelwert der Summen von Bildpixeln abweichen, welche über anderen X-Positionen aufsummiert sind, und die den Verlauf der Arbeitslinie 8, 9 im erfassten Bereich wiedergeben, durch eine Grauwertlinie 6 in Fig. 2 bzw. 7 in Fig. 6 veranschaulicht. Die Grauwertlinie 6, 7 weist im Bereich des Ausschnittes 5 einen entsprechend den Streuungen der zur Arbeitslinie 8, 9 in Berührung stehenden Bildpixel verbreiterten Verlauf auf und ist deshalb als balkenartige Punkthaufenlinie dargestellt.

Entsprechende Streuungen ergeben sich bei unklaren Kontrastsituationen, unterschiedlichen Markierungsstärken oder auch teilweise absätzigen Darstellungen der Arbeitslinie 8, 9 und bedingen, entsprechend der Verbreiterung der Grauwertelinie 6 bzw. 7, gegenüber einer exakt vorgegebenen Arbeitslinie 8, 9 Unklarheiten hinsichtlich der Arbeitsrichtung.

In einem vierten Schritt wird die Steigung der Arbeitslinie im zentrierten Koordinatensystem bestimmt. Dazu werden rechnerisch Geraden durch den Punkt (x,y)=(0,0) mit einer Vielzahl, beispielsweise 20 bis 50 verschiedenen, möglichen Steigungen m (hier definiert als m = dx/dy) hypothetisch in das Bild eingezeichnet und entlang dieser geraden die Helligkeitswerte der von der jeweiligen Geraden berührten Pixel aufsummiert. Trifft eine dieser hypothetischen Geraden eine tatsächlich im Bild vorhandene Arbeitslinie, so wird die so gebildete Summe der Helligkeitswerte gegenüber allen anderen Summen einen Extremwert aufweisen.

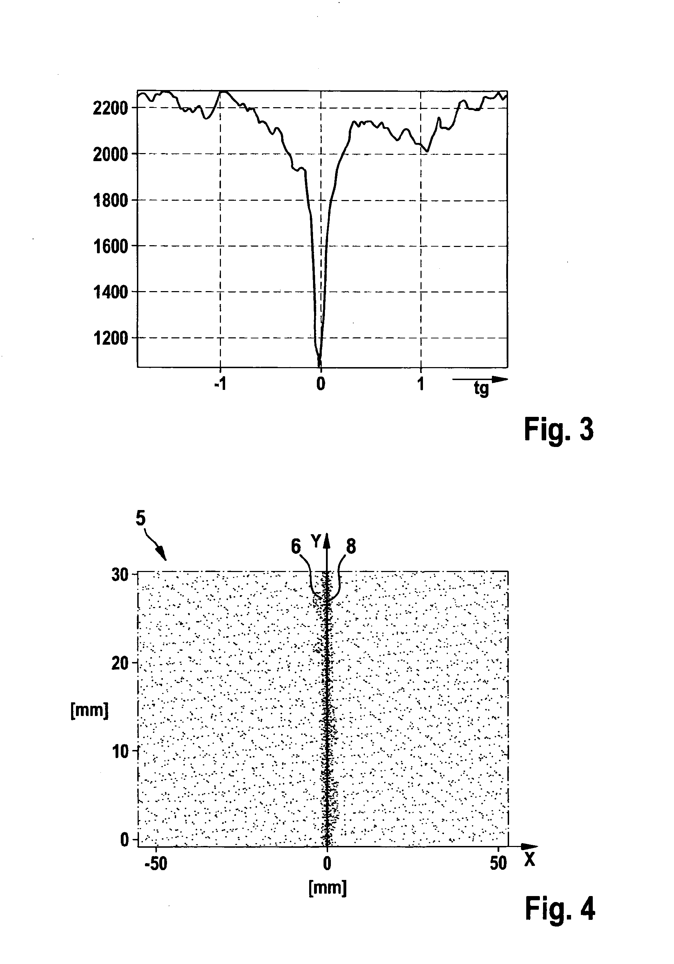

Das heißt, zur Präzisierung der Position der Arbeitslinie wird die Steigung der jeweiligen Grauwertlinie 6 bzw. 7 (Fig. 4 und 6) bestimmt, wozu zu strahlenförmig, insbesondere fächerartig vom Ausgangspunkt ausgehenden, ideellen Geraden jeweils die Grauwerte der Bildpixel, die zu diesen Geraden in Berührung stehen oder in Überdeckung liegen, aufsummiert werden. Der Verlauf der Arbeitslinie 8, 9 wird im Bereich des Ausschnittes 5 durch die Gerade des Geradenfächers bestimmt, für die der Summenwert der Bildpixel im Vergleich zum Summenwert der Bildpixel aller übrigen Geraden einen Extremwert aufweist.

In den Grafiken gemäß Fig. 3 und 7 ist dies dadurch veranschaulicht, dass die Summen-Grauwerte der Bildpixel für die Geraden des Geradenfächers über der für die jeweiligen Geraden gegebenen Steigung aufgetragen werden, woraus sich für die der jeweiligen Grauwertlinie 6 bzw. 7 entsprechende Arbeitslinie 8, 9 eine Steigung und damit der Verlauf zur X-Achse ablesen lässt. Figur 4 zeigt den Verlauf der Summe über der hypothetischen Geradensteigung m für das erste Ausführungsbeispiel. Man erkennt, dass die Steigung bei m=0 eine Extremalwert besitzt. Die so ermittelte Steigung m=0 wurde in Figur 4 eingezeichnet und passt genau zu der Richtung der beispielsweise als Bleistiftstrichursprünglich aufgebrachten Arbeitslinie. Im Gegensatz zum Ausführungsbeispiel der Figuren 1 bis 4 bei dem der Verlauf zur X-Achse senkrecht ist, ist bezogen auf die Darstellung des zweiten Ausführungsbeispiels gemäß Fig. 8 der Verlauf unter einem Winkel zur X-Achse geneigt, wobei diese Winkellagen sich bezogen auf den Verlauf der Arbeitslinie 8, 9 im Bereich des Ausschnittes 5 beziehen, wie aus Fig. 4 und 8 ersichtlich. Da nur wenige Pixel in y-Richtung für die Auswertung der Helligkeitssummen betrachtet werden, kann auch so eine Arbeitslinie in Form eines Kreisbogen, wie sie im zweiten Ausführungsbeispiel vorliegt, im Nahbereich vor dem Arbeitswerkzeug der Maschine gut mit einem Geradenstück approximiert werden.

In einem fünften Schritt des Verfahrens erfolgt die Nachführung des Arbeitswerkzeuges oder des Elektrowerkzeuges in Richtung der berechneten Steigung m.

Entsprechend dem jeweils in einem Bildausschnitt 5 zu erfassenden Bereich der jeweiligen Arbeitslinie 8, 9 wandert der Bildausschnitt 5, und mit dem Bildausschnitt 5 auch das virtuelle Koordinatensystem, mit dem im Schnittpunkt der Achsen liegenden jeweiligen "Ansatzpunkt" der Arbeitslinie 8, 9 entlang dem weiteren Verlauf der Arbeitslinie 8, 9. Bei einem Verfahren des Elektrowerkzeuges kommt also ein neuer Ausschnitt 5' unmittelbar vor dem Arbeitswerkzeug zur Auswertung, so dass auch eine neue Bestimmung der Nahbereichsausrichtung der Arbeitslinie 8 bzw. 9 erfolgt.

Das Elektrowerkzeug bzw. Arbeitsgerät kann beispielsweise aber nicht abschließend eine Stichsäge oder auch eine Fräse sein, die entlang einer aufgebrachten, vorgegebenen Arbeitslinie sägen oder fräsen soll. Eine solche Stichsäge ist beispielhaft in der Figur 9 dargestellt.

Figur 9 zeigt ein erfindungsgemäßes Elektrowerkzeug, insbesondere eine Handhubsäge 10 in der Form einer Scrolling Jigsaw, in einer perspektivischen Seitenansicht. Die Handhubsäge 10 umfasst ein Maschinengehäuse 44 mit einem im Maschinengehäuse 44 integrierten Haupthandgriff 46, einer Werkzeugaufnahme 48 mit einem darin aufgenommenen Werkzeug in der Form eines Sägeblatts 12, das drehbar angeordnet ist. An einer einem zu bearbeitenden Werkstück 2 zugewandten Seite 50 ist ein Gleitelement bzw. ein Gleitschuh 11 in der Form einer Fußplatte angeordnet. Dieser Gleitschuh 11 ermöglicht ein vorteilhaftes Gleiten der Handhubsäge 10 auf dem Werkstück 2. An der vom Sägeblatt 12 abgewandten Seite 52 in einem dem Haupthandgriff 46 zuordenbaren Bereich ist ein Führungsknauf 54 angeordnet, der zu einer zumindest manuellen Führung der Handhubsäge 10 dient. Ferner ist im Maschinengehäuse 44 ein nicht näher dargestellter Motor angeordnet. Am Haupthandgriff 46 ist ein Betätigungsschalter 56 vorgesehen, mittels dem die Handhubsäge 9 ein und ausgeschaltet werden kann. Ferner ist in einem Seitenbereich 58 des Maschinengehäuses 44 ein Verstellschalter 60 angeordnet, über den der Gleitschuh 11 relativ zu einer Haupterstreckung 62 des Sägeblatts 12 verstellt werden kann.

Die Handhubsäge 10 umfasst Steuermittel 100, 101, mittels denen ein Nachführen des Sägeblatts 12 entlang der Anrisslinie 8 bzw. 9 automatisierbar ist. Das Steuermittel 101 ist in einem vom Haupthandgriff 46 in axialer Richtung 64 abgewandten Teil 66 des Maschinengehäuses 44 angeordnet. Das Steuermittel 101 umfasst einen Sensor 16 zur Detektion bzw. zur optischen Erfassung einer auf das Werkstück 18 aufgebrachten Markierung bzw. Anrisslinie 8 bzw. 9 in der Form eines normalen Bleistiftstrichs. Der Sensor 16 ist von einer Kameraeinheit 17 gebildet, die bevorzugt eine Low-Cost Kamera beinhaltet, und der eine Recheneinheit 28 zugeordnet ist. Der Sensor 16 könnte grundsätzlich auch eine Kontrastsensoreinheit 20 und/oder eine Wirbelstromsensoreinheit 22 sein, denen jeweils eine Recheneinheit 28 zugeordnet ist. Für eine optimale Detektion der vorgezeichneten Linie 8,9 wäre auch eine Anordnung des Wirbelstromsensors 22 im Gleitschuh 11 denkbar.

Ein Überwachungsbereich 68 des Sensors 16 bzw. der Kameraeinheit 17 verläuft in Richtung der Haupterstreckung 62 des Sägeblatts 12 auf das Werkstück 18 zu und deckt einen 360° Winkelbereich um das Sägeblatt 12 ab. Der Überwachungsbereich 68 der Kameraeinheit 17 stellt den Bereich dar, in dem das Sägeblatt 12 in einem Bearbeitungsmodus, bevorzugt ein Sägevorgang eines Werkstücks 18, arbeitet. Der Gleitschuh 11 weist um das Sägeblatt 12 eine teilkreisförmige Ausnehmung 70 auf, in der das Sägeblatt 12 zentrisch angeordnet ist. In Richtung einer Vorschubrichtung 38 bzw. in Richtung des Überwachungsbereichs 68 weist die Ausnehmung 70 ein rechteckiges Sichtfenster 102 auf. Ferner weist der Gleitschuh 11 eine Referenzmarke 74 auf, die einen Schnittpunkt einer Kante 76 des Gleitschuhs 11 mit einer Längserstreckungsachse 78 des Gleitschuhs 11 markiert.

Mit Hilfe der Steuermittel 100, 101, nämlich dem Sensor 16 und der Stelleinheit 30, kann ein Regelkreis zur möglichst exakten Verfolgung der vorgegebenen Linie bzw. der Anrisslinie 8 bzw. 9 implementiert werden. Die Besonderheit liegt dabei in der Automatisierung des Systems. Somit ist es möglich, saubere, gerade Schnitte von Hand durchzuführen und aktiv eine Abweichung des Sägeblatts 12 zu verhindern.

Eine zusätzlich oder alternative Ausführung ist die Integration einer Ermittlung einer Vorschubgeschwindigkeit. Hierfür sind im Gleitschuh 11 auf einer dem Werkstück 2 zugewandten Seite 84 optische Maussensoren 15 angeordnet, die die Geschwindigkeit und eine Bewegungsrichtung bevorzugt in x- und/oder y-Richtung ermitteln.

Das erfindungsgemäße Elektrowerkzeug ist nicht auf das beschriebene Ausführungsbeispiel beschränkt. Neben de schon erwähnten, insbesondere handgeführten (Ober-) Fräse, sind eine Vielzahl von Elektrowerkzeugen vorstellbar, die ein Linienerfassung nach dem erfindungsgemäßen Verfahren nutzen.

Möglich ist beispielsweise auch ein Elektrowerkzeug in Form eine Nähmaschine, die entlang einer solchen Linie nähen soll. Weitere Anwendungen sind beispielsweise das Auftragen eines Klebers oder das Schneiden von Materialien, mittels beispielsweise Ultraschall, Laser- oder auch Wasserstrahl. Entsprechende Geräte sind im Rahmen dieser Anmeldung als Elektrowerkzeuge zu verstehen.

## Patentansprüche

1. Verfahren zur sensorischen Bilderfassung einer auf einem Werkstück (2) gegebenen und mit einem Arbeitswerkzeug eines Arbeitsgerätes, welches mit einer Bilderfassungseinrichtung ausgerüstet ist, nachzufahrenden Arbeitslinie (8, 9) bei dem ein an das Arbeitswerkzeug angrenzender Bildausschnitt (5) als Grauwertbild erfasst wird und die Lage des Ansatzpunktes des Arbeitswerkzeuges am Werkstück (2) bezogen auf den Bildausschnitt (5) dadurch bestimmt wird, dass im Bildausschnitt (5) für eine Anzahl von Positionen längs der Ansatzkante für das Arbeitswerkzeug am Werkstück senkrecht zur Ansatzkante die Grauwerte aufsummiert werden und die Position, für die in der Summe die größte Abweichung vom Mittelwert der Summen aller Positionen gegeben ist, als Ansatzpunkt gesetzt wird und bei dem die Verlaufsrichtung der Arbeitslinie (8, 9) ausgehend von dem Ansatzpunkt dadurch erfasst wird, dass zu fächerartig vom Ansatzpunkt ausgehenden Geraden eines Geradenfächers jeweils die Grauwerte von zu diesen Geraden in Berührung stehenden Bildpixeln aufsummiert werden und dass der Verlauf der Arbeitslinie (8, 9) durch die Gerade bestimmt ist, für die der Summenwert der Bildpixel im Vergleich zum Summenwert der Bildpixel der übrigen Geraden des Geradenfächers einen Extremwert aufweist.

2. Verfahren nach Anspruch 1, **dadurch gekennzeichnet, dass** der jeweilige Bildausschnitt (5) bezüglich der Bildpixel mehrstufig ausgewertet wird, in einer ersten Stufe zur Erfassung des Ansatzpunktes des Arbeitswerkzeuges zum Werkstück (2) und in einer weiteren Stufe bei zum Ansatzpunkt zentriertem Bildausschnitt (5) zur Erfassung der Ausrichtung der Arbeitslinie (8, 9) innerhalb des jeweiligen Bildausschnittes (5) ausgehend vom Ansatzpunkt.

3. Verfahren nach Anspruch 1 oder 2, **dadurch gekennzeichnet, dass** die Grauwerte für die jeweilige, längs der Ansatzkante gegebene Position senkrecht zur Ansatzkante und von dieser ausgehend aufsummiert werden.

4. Verfahren nach einem der Ansprüche 1 bis 3, **dadurch gekennzeichnet, dass** die Zentrierung des Bildausschnittes auf den Ansatzpunkt als Mitte der Arbeitslinie und der Ansatzpunkt des Arbeitswerkzeuges zur Deckung gebracht werden.

## Claims

1. Method for sensor image acquisition of a work line (8, 9) that is provided on a workpiece (2) and is to be tracked by a tool of a working device that is equipped with an image acquisition device, in the case of which method an image section (5) that is adjacent to the tool is acquired as a grayscale image, and the position of the application point of the tool on the workpiece (2) with reference to the image section (5) is determined by summing the grayscale values in the image section (5) for a number of positions along the application edge for the tool on the workpiece perpendicular to the application edge, and by taking as application point the position for which, in sum, the greatest deviation from the mean value of the sums of all the positions occurs, and in the case of which method the running direction of the work line (8, 9) starting from the application point is acquired by virtue of the fact that in relation to straight lines, starting in a fan from the application point, of a fan of straight lines the grayscale values of image pixels in contact with said straight lines are respectively summed, and that the course of the work line (8, 9) is determined by the straight line for which the sum value of the image pixels has an extreme value in comparison to the sum value of the image pixels of the remaining straight lines of the fan of straight lines.

2. Method according to Claim 1, **characterized in that** the respective image section (5) is evaluated with reference to the image pixels in multiple stages, in a first stage in order to acquire the application point of the tool in relation to the workpiece (2), and in a further stage with the image section (5) centered in relation to the application point in order to acquire the alignment of the work line (8, 9) within the respective image section (5) starting from the application point.

3. Method according to Claim 1 or 2, **characterized in that** the grayscale values for the respective position given along the application edge, perpendicular to the application edge and starting therefrom, are summed.

4. Method according to one of Claims 1 to 3, **characterized in that** the centering of the image section onto the application point as the center of the work line and the application point of the tool are brought into coincidence.

## Revendications

1. Procédé d'acquisition d'images au moyen de capteurs d'une ligne de travail (8, 9) appliquée à une pièce à usiner (2) et devant être suivie par un outil de travail d'une machine de travail qui est équipée d'un dispositif d'acquisition d'images, dans lequel une section d'image (5) adjacente à l'outil de travail est acquise sous la forme d'une image en niveaux de gris et la position du point de départ de l'outil de travail est déterminée par rapport à la section d'image (5) à l'emplacement de la pièce à usiner (2) en calculant dans la section d'image (5) la somme des valeurs de gris pour un certain nombre de positions le long du bord de départ pour l'outil de travail à l'emplacement de la pièce à usiner perpendiculairement au bord de départ et la position pour laquelle le plus grand écart à la valeur moyenne des sommes de toutes les positions est obtenue dans la somme est fixée comme étant le point de départ et dans lequel la direction d'extension de la ligne de travail (8, 9) à partir du point de départ est détectée en sommant sur des droites partant en éventail du point de départ d'un éventail de droites, les valeurs de gris de pixels d'image en contact avec lesdites droites et en déterminant le tracé de la ligne de travail (8, 9) comme étant la droite pour laquelle la valeur de somme des pixels d'image présente une valeur extrême par comparaison à la valeur de somme des pixels d'image des droites restantes de l'éventail de droites.

2. Procédé selon la revendication 1, **caractérisé en ce que** la section d'image (5) respective est évaluée en plusieurs stades par rapport aux pixels d'image, lors d'un premier stade destiné à détecter le point de départ de l'outil de travail à la pièce à usiner (2) et lors d'un second stade lors duquel la section d'image (5) est centrée sur le point de départ pour détecter l'orientation de la ligne de travail (8, 9) à l'intérieur de la section d'image (5) à partir du point de départ.

3. Procédé selon la revendication 1 ou 2, **caractérisé en ce que** les valeurs de gris correspondant à la position respective définie le long du bord de départ sont sommées perpendiculairement au bord de départ et en partant de ce dernier.

4. Procédé selon l'une quelconque des revendications 1 à 3, **caractérisé en ce que** le centrage de la section d'image sur le point de départ en tant que milieu de la ligne de travail et le point de départ de l'outil de travail sont amenés à coïncider.
